# EUROPEAN PATENT APPLICATION

(11) **EP 1 027 940 A1**
(43) Date of publication of application: **16.08.2000**
(21) Application number: 98936704.0
(22) Date of filing: 07.08.1998
(51) Int. Cl.: B09C 1/10

(54) **METHOD FOR PURIFYING CONTAMINATED SOIL**

(30) Priority: 07.08.1997 JP 22446897
(71) Applicant: TOYOTA JIDOSHA KABUSHIKI KAISHA, Aichi-ken 471-8571 (JP)
(72) Inventor: KAMBE, Hiromi, Toyota-shi, Aichi 471-8571 (JP); MURAKAMI, Naoki, Toyota-shi, Aichi 471-8571 (JP); OKAMURA, Yukio, Toyota-shi, Aichi 471-8571 (JP)
(74) Representative: Ben-Nathan, Laurence Albert
(86) International application number: JP9803534
(87) International publication number: WO9907490

(57) **Abstract**

The present invention relates to a method of cleaning up a soil contaminated with organic matter such as oil without the need of pH adjustment or the emission of bad odors, said method comprising adding organic materials such as compost that have been completely fermented and matured to a soil contaminated with organic matter so that the indigenous microorganisms are activated to degrade and remove contaminants in the soil. In addition to adjusting pH of the soil to about neutral with organic materials, the method of the present invention promotes the degradation and removal of the contaminants in the soil through the microorganisms that were introduced by the organic materials.

## Description

### Technical Field

The present invention relates to a method of cleaning up contaminated soils using organic materials.

### Background Art

Conventional methods that have been used to remove contaminating materials from soils contaminated with hydrocarbon compounds and the like include physical treatments such as incineration, chemical treatments such as washing with a surfactant etc., and biological treatments such as microbial degradation of contaminating materials. Of them, biological methods are attracting special attention in recent years as a bio-remediation technology because of their features of being low cost and low energy consumption. The bio-remediation is a method of cleaning up soils, comprising adding nutrients such as nitrogen and phosphorus compounds to a soil contaminated with hydrocarbon compounds and the like, supplying oxygen to the soil by agitation etc. and regulating water content thereby to enhance the ability of indigenous microorganisms to degrade organic matter.

A conventional method for biological cleanup is a method that generally comprises supplying nutrients to indigenous microorganisms by adding inorganic compounds containing nitrogen and phosphorus and thereby activating microorganisms to degrade and remove the contaminants in the soil (PCT Japanese National Publication No. 7-507208 and PCT Japanese National Publication No. 9-501841). However, the method is not very effective when there are no or very few microorganisms present in the soil that degrade contaminating materials. In addition, there have been problems wherein the optimum pH for the growth of microorganisms in the soil is 6 to 9 (see Tsutomu Hattori et al., "Tshutino Biseibutsugaku (Microbiology of the Soil)", K.K. Youshitsudo, p. 13), and cleaning up of the soil having a pH outside of the above range was not very effective or pH adjustment was required for effective cleaning up of the soil.

The Japanese Unexamined Patent Publication (Kokai) No. 7-200459 discloses a method wherein immature organic materials are added to a contaminated soil, which are allowed to be decomposed in the soil, and during the process of degrading the contaminants in the soil are concomitantly degraded and removed. The problem, however, had a drawback of emitting bad odors during the process of degradation and maturation of the organic materials, and therefore an additional means was required of preventing the odors and the supply of oxygen for fermentative maturation of the organic materials was necessary, which rendered the method costly due to the necessity of supplying air and the like. Furthermore, the temperature could increase depending on the degree of fermentation, which has a risk of killing microorganisms.

Japanese unexamined patent publication (Kokai) No. 56-69291 and No. 63-201081 describe that soils can be physicochemically and biologically improved by supplying nutrients and microorganisms to the soil by adding organic materials to the soils such as rice paddies and fields. However, the method is intended to enhance the yield of agricultural products by improving the soil, and no mention has been made of the addition to soils that are unsuitable for cultivating plants such as the soil contaminated with oil.

### Disclosure of the Invention

Thus, the present invention is intended to provide a method of improving effectively a soil contaminated with organic matter such as oil without the need of pH adjustment or the emission of bad odors.

After intensive research to solve the above problems, the inventors of the present invention have found that the above problems can be solved by adding organic materials that have been completely fermented and matured to a soil contaminated with organic matter, and have completed the present invention.

Thus, the present invention provides a method of cleaning up a contaminated soil, comprising adding an organic material that has been completely fermented to a soil contaminated with organic matter.

Organic materials that have been completely fermented contains nutrients such as nitrogen compounds as well as a great number of microorganisms and have a potent pH buffering ability. Thus, by adding the organic materials to the soil, pH of the soil, even when it is far off neutral, can be adjusted to about neutral and the contaminants in the soil can be effectively degraded and removed by the microorganisms brought in from the organic materials. On the other hand, the organic materials that have been completely fermented are not rapidly decomposed and thereby do not increase the temperature, nor do they emit bad odors. The soil that has been treated by the method of the present invention can also be advantageously applied to the cultivation of plants.

### Brief Description of Drawings

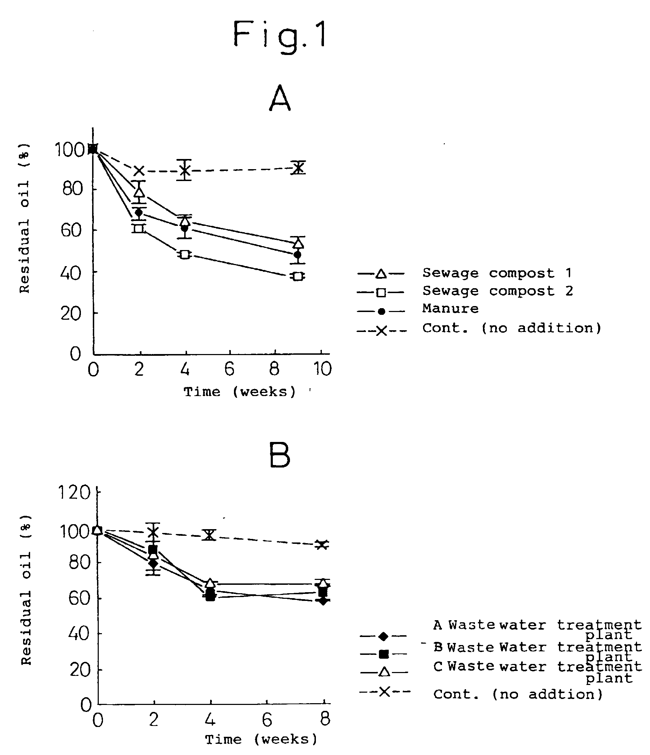

Figure 1, A is a graph showing changes with time in the percentage of residual oil in the soil when oil in the soil was degraded by sewage compost or manure.
Figure 1, B is a graph showing changes with time in the percentage of residual oil in the soil when oil in the soil was degraded by activated sludge from a waste water treatment plant.
Figure 2, A is a graph showing changes with time in the percentage of residual oil when oil in the soil B was degraded by manure.

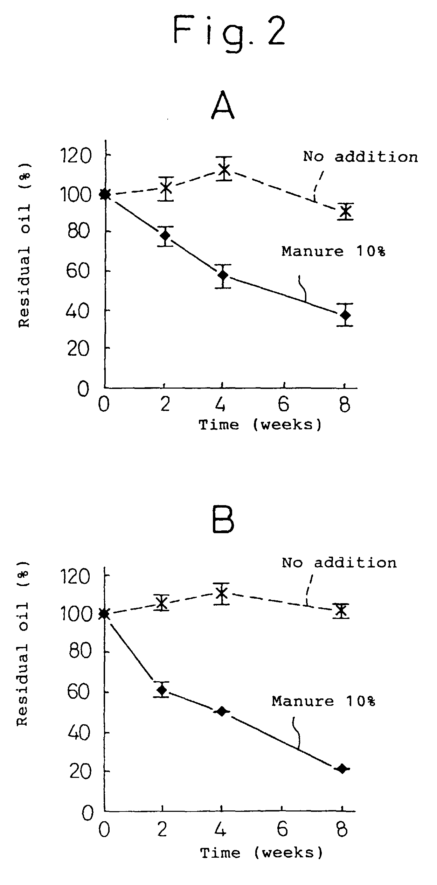

Figure 2, B is a graph showing changes with time in the percentage of residual oil when oil in the soil C was degraded by manure.

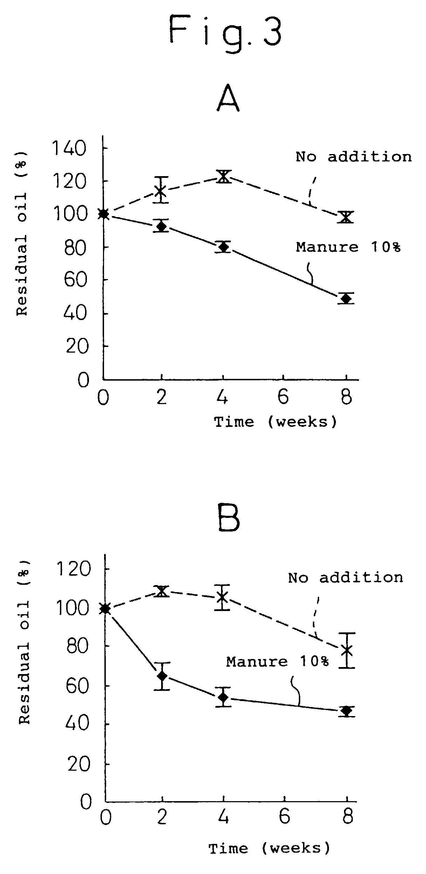

Figure 3, A is a graph showing changes with time in the percentage of residual oil when oil in the soil D was degraded by manure.
Figure 3, B is a graph showing changes with time in the percentage of residual oil when oil in the soil E was degraded by manure.

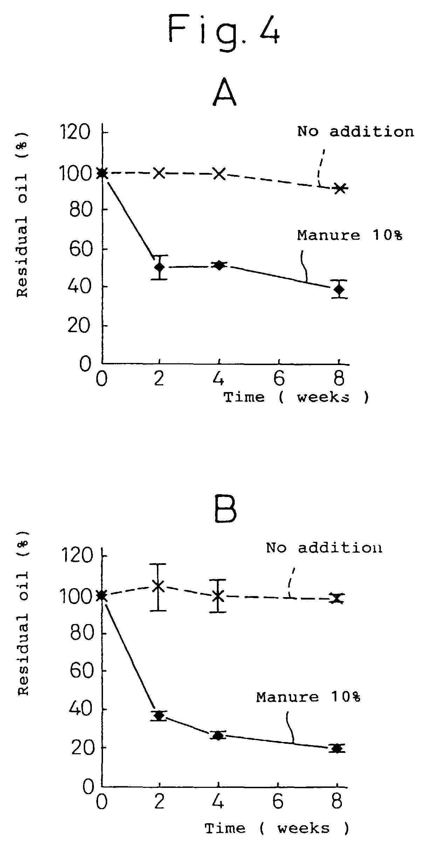

Figure 4, A is a graph showing changes with time in the percentage of residual oil when oil in the soil F was degraded by manure.
Figure 4, B is a graph showing changes with time in the percentage of residual oil when oil in the soil G was degraded by manure.

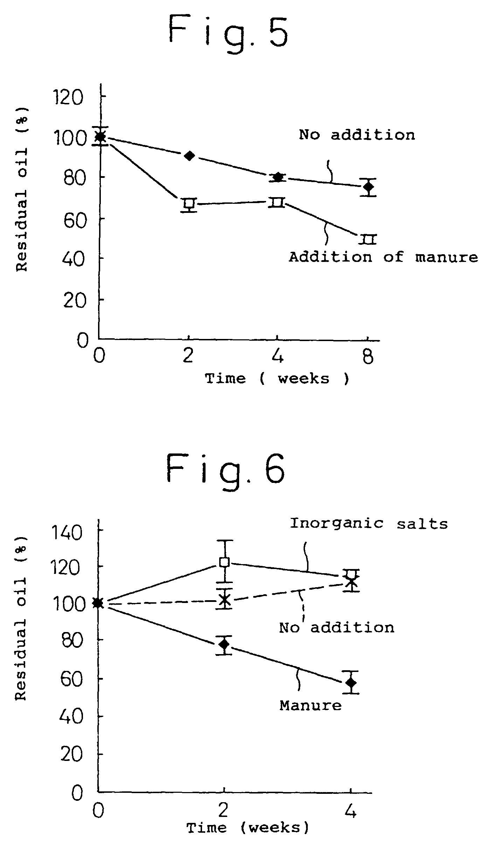

Figure 5 is a graph showing changes with time in the percentage of residual oil when a soil contaminated with heavy oil C was cleaned up by manure.
Figure 6 is a graph showing a pH buffering effect of manure on the degradation of oil in the soil.

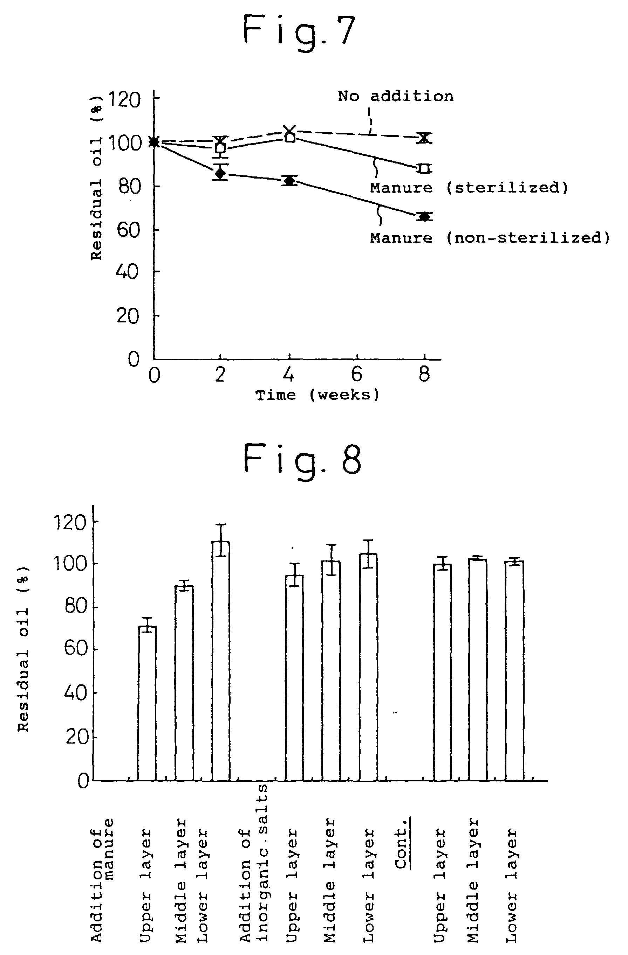

Figure 7 is a graph showing a microorganism-introducing effect of manure on the degradation of oil in the soil.
Figure 8 is a graph showing an effect of aeration on the degradation of oil in the soil.

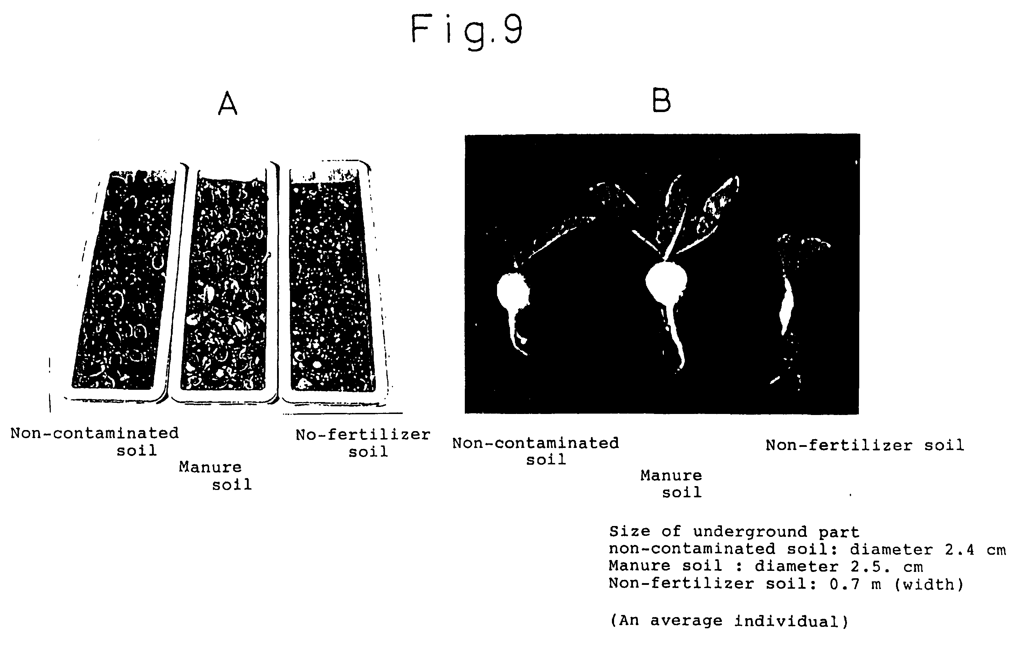

Figure 9 is a graph confirming a cleaning up effect by manure in the oil-contaminated soil in terms of plant cultivation.

### Embodiment for Carrying out the Invention

The method of the present invention can be widely applied to soils contaminated with organic matter that can be degraded with microorganisms and is especially useful for soils contaminated with hydrocarbon organic matter, for example oil such as cutting oils, lubricants, and heavy oils.

The organic materials for use in the present invention include manure derived from bedding mixed with animal slops from domestic animals etc., compost made from stacked organic materials, activated sludge used in microbial treatment of waste water, and the like.

The organic materials of the present invention such as the above-mentioned manure and compost must be those that have been completely fermented and have been matured. In fermentation, organic matter is decomposed by the action of microorganisms, and protein in particular is decomposed such that organic nitrogen becomes inorganic. During this process, a large amount of heat and bad odors are generated, while on completion of the fermentation, the decomposition becomes slow and a large amount of heat and bad odors are not generated any more. Furthermore, although activated sludge actually does not perform fermentation, it has the same effect as that of manure and compost.

In accordance with the present invention, the fermented organic materials are added at an amount of 5 to 50 percent by weight, preferably 5 to 10 percent by weight, though the amount varies depending on the type of contaminants, the degree of contamination, the type of organic materials, and the like. The treatment temperature may be normal overground temperature of, for example, 10 to 30°C. The time of degradation is about 1 to 10 weeks though it varies depending on the type of contaminants, the degree of contamination (the concentration of contaminants) and the like.

In the actual work, a contaminated soil, for example, may be plowed, into which is added organic materials and mixed. The plowing is not necessarily required depending on the type of the soil and the amount mixed of the organic materials.

### Examples

The present invention will now be explained in more details with reference to the following Examples.

### Example 1. The effect of adding organic sources as nutrients

Figure 1 A shows an example in which oil was eliminated by activating the indigenous microorganisms by adding manure (for example, cowpat manure) or sewage compost to a soil contaminated with a lubricant oil. In the experimental condition, to 200 g of a soil that was sieved with a 6 mm mesh to remove gravels etc. was added by spraying a lubricant oil and mixed to uniformly contaminate (adjusted to about 5000 ppm), and then manure or sewage compost was added to about 10 percent by weight, which was then incubated for weeks in a 30°C incubator. The total weight of a water content-adjusted test sample was measured, and the amount of sterile water corresponding to the decrement was replenished twice per week (a total weight method) and agitation was performed once per week using a spatula. At this time the soil was subjected to experiments by being placed in a stainless steel cylindrical pot (10 cm in diameter x 6 cm high, with a lid).

For quantitation of oil in the soil, about 6 g of each soil was sampled in triplicate, dried, pulverized, and extracted with n-hexane. After evaporating n-hexane, the samples were dried in an 80°C thermostat for 8 hours, and the weight of the residue was measured as the amount of oil. It is clear from Figure 1 A that the percentage of residual oil is decreased by adding manure and sewage compost.

Activated sludge taken at a waste water treatment plant was centrifuged (6000 rpm x 2 min) and the supernatant was discarded to obtain a sludge, which was added at an amount of 10% (wet amount) relative to that of the contaminated soil and agitated to homogeneity as mentioned above, and oil in the soil was determined. The result is shown in Figure 1 B. Activated sludge was obtained from three waste water treatment plants. Purification also proceeded when activated sludge was added as shown in Figure 1 B.

From the foregoing, when organic materials are added to a contaminated soil, the indigenous microorganisms are activated and the effect of adding nutrients are such that are enough to cleanup the contaminated soil.

### Example 2. Applicability to other soils

Example 1 is the result of the experiment all conducted on the same soil (soil A in Table 1) while the results of the investigation when manure (cowpat manure) was added to different types of soils (see Table 1) are shown in Figures 2 to 4. The experimental condition is the same as shown in the above Example.

**Table 1**

| Properties of each soil tested | | |
|---|---|---|
| Identification | pH | Features |
| A | 7.61 | sandy |
| B | 4.31 | forestine earth |
| C | 4.60 | sandy |
| D | 8.46 | sandy |
| E | 6.24 | argillaceous, light-weight |
| F | 7.73 | argillaceous |
| G | 6.99 | argillaceous |

It is clear from Figures 2 to 4 that the addition of manure to each soil tested results in an effective purification.

### Example 3. Applicability to other contaminants

In Examples 1 and 2, soils contaminated with a lubricant were studied. Example 3 shows applicability to soils contaminated with other contaminants such as heavy oil C. The soil was contaminated with heavy oil C and manure (cowpat manure) was added thereto as mentioned above. After culturing, samples were taken from each soil, dried, and pulverized. Then oil was extracted with dichloromethane, and changes with time in the residual oil were studied as shown in Figure 5. The figure shows that the addition is also effective in purifying the soil contaminated with heavy oil C.

### Example 4. Effects of adjusting pH of the soil

Changes with time in residual oil when inorganic salts or manure (cowpat manure) were added as nutrients to an acidic soil contaminated with a lubricant oil are shown in Figure 6. The experimental condition is the same as in the above, and inorganic salts were a mixture of phosphates and NH₄Cl (K₂HPO₄, KH₂PO₄, and NH₄Cl were mixed at a ratio of 18 : 12 : 40, and the mixture was added at 250 ppm as the amount of nitrogen to the soil).

Figure 6 shows that cleanup did not proceed at all when inorganic salts were added, but proceeded smoothly when manure was added. As a possible cause for this, inappropriateness of the soil's pH was examined and the result is shown in Table 2. It is clear from Table 2 that the pH of the soil increased from 4.3 to 6.1 following the addition of manure. This was maintained till 4 weeks of culturing has passed. Thus, since manure has a pH buffering activity, it can save labor and cost in adjusting pH as compared to when inorganic salts are added.

The determination of the soil's pH was conducted as mentioned below in accordance with an experimental book ("Dojo Hyojun Bunseki Sokuteiho (A Standard Method for Analyzing and Determining the Soil)", edited by Dojo Hyojun Bunseki Sokuteiho Iinkai (The Committee of A Standard Method for Analyzing and Determining the Soil), K.K. Hakuyusha, pp. 70-71). Ten grants of soil was taken in a 50 ml centrifuge tube and 25 ml of distilled water was added thereto. This was mounted to a shaker (SA31 manufactured by YAMATO) and was shaken at a horizontal speed of 180 s.p.m. The centrifuge tube was then allowed to stand for over one hour, and pH of the supernatant of the soil suspension was determined using a pH meter (P/N 123132 PHI-10 manufactured by Beckman).

**Table 2**

| Effects of additives on the Soil's pH | |
|---|---|
| Additive | pH |
| Manure | 6.1 |
| Inorganic salts | 3.9 |
| None | 4.3 |

### Example 5. Effects of introduction of microbial flora

In order to study the effects of introduction of microbial flora of manure, manure (cowpat manure) was sterilized and added, and difference was studied from when manure was added without sterilizing. The result is shown in Figure 7. The experimental condition is the same as in Example 1. Sterilization of manure was conducted by autoclaving (121°C, 1.2 atm, 20 minutes) three times every other day. At this time, sterilization was confirmed to be complete by determining microbial counts in the manure in a diluted plate method using the 1/100NB agar medium and confirming the absence of colony formation.

It was found as shown in Figure 7 that cleanup proceeds very little when the sterilized manure is added whereas it proceeds when the non-sterilized manure is added. Therefore, manure has an effect of introducing microbial flora, and thereby it is especially effective when purifying a contaminated soil that has no or very few indigenous microorganisms.

### Example 6. Improvement of physical properties of the soil

The percentage of residual oil obtained when each of manure and inorganic salts is added to a soil and filled into a column followed by culturing for 4 weeks is described. After manure and 2 kg of the soil (the weight of wet soil) were mixed in a stainless steel bat to a homogeneity, it was filled into a column (vinyl chloride tubing, 5 cm in diameter x 50 cm high) (a packing density: 1.11 g/cm³) and cultured in a 30°C incubator. The agitation as shown in Example 1 was not conducted. When the amount of oil was to be quantitated, the entire soil was taken out from the column and 5 cm each from the upper layer, the middle layer, and the lower layer was excised. The center of each bottom surface was bored by a cork borer (Φ 19 mm), and those portions were mixed to homogeneity and divided into three equal parts as samples. The analysis of oil was conducted as shown in Example 1.

As shown in Figure 8, the degradation of oil was observed at the upper layer when manure was added. This is probably because the addition of manure improved the aeration of the soil and thereby air required for microbial activities were supplied at the upper layer. On the other hand, very little degradation was observed even at the upper layer when inorganic salts were added. Since degradation during intermittent agitation culture after the addition of inorganic salts otherwise proceeds equally to that when manure was added, the current difference was considered to be caused by improved aeration in the soil due to the addition of manure. Thus, it will be possible to obviate or reduce the need for the agitation treatment that is essential for the normal cleanup treatment. At the same time, the addition of manure to the soil would reduce the viscosity of the soil and thereby a power-saving effect for agitating the soil can be expected.

### Example 7.

A planting experiment was conduced using a soil that was cleaned up for 4 weeks. An oil-contaminated soil without the addition of a fertilizer (oil content 4500 ppm, hereinafter referred to as the no-fertilizer soil) and an oil-contaminated soil that was cleaned up 4 weeks after adding 10% manure (cowpat manure) (oil content 3300 ppm, hereinafter referred to as the manure soil) were filled in a plantar. To these soils and a soil taken from a wood (hereinafter referred to as the non-contaminated soil) was seeded commercially available radish. After seeding, water was added once every two days. After week 2, a pulverized raw Hyponex (N : P : K = 5 : 10 : 5) (manufactured by HYPONEX) diluted 500-fold was applied once every week.

Germination started from one week later and germination was observed in only 8 out of 21 seeds for the no-fertilizer soil, whereas in 16 out of 21 for the non-contaminated soil, and in 19 out of 21 for the manure soil. Thereafter, germination gradually started in the non-added soil and finally 16 seeds have shown germination (20 for the non-contaminated soil and the manure soil).

On week 11, growth of the both was compared. In the no-fertilizer soil, the dry weight of the overground part was 0.090 ± 0.027 g and that of the underground part was 0.100 ± 0.031 g, in the manure soil the dry weight of the overground part was 0.227 ± 0.090 g and that of the underground part was 0.880 ± 0.278 g, and in the non-contaminated soil the dry weight of the overground part was 0.193 ± 0.065 g and that of the underground part was 0.685 ± 0.241 g. Thus, the growth at the manure soil is much faster than the no-fertilizer soil and is slightly faster than the non-contaminated seeds. It is expected that especially the underground part is developed in the manure soil at the plants grew normally without any growth inhibition by oil.

These Examples confirmed that the soil that was cleaned up after the addition of manure can be planted immediately after the purification treatment. The result is shown in Figure 9.

## Claims

1. A method of cleaning up a contaminated soil comprising adding to said soil contaminated with organic matter organic materials which have been completely fermented or will not be virtually fermented.

2. The method according to claim 1 in which said contaminating organic matter is hydrocarbons.

3. The method according to claim 1 or 2 wherein said organic material is compost or manure.

4. The method according to claim 3 wherein said organic material is manure.

5. The method according to claim 4 wherein said organic material is cowpat manure.

6. The method according to any of claims 1 to 5 wherein the amount of said fermented organic material is 5 to 50 percent by weight relative to that of the contaminated soil.

7. The method according to claim 6 wherein the amount of said fermented organic material is 5 to 10 percent by weight relative to that of the contaminated soil.

8. The method according to any of claims 1 to 7 wherein the treatment temperature is 10 to 30°C.

9. The method according to any of claims 1 to 8 wherein the period of treatment is 1 to 10 weeks.
